# EUROPÄISCHE PATENTANMELDUNG

(11) **EP 2 810 815 A1**
(43) Veröffentlichungstag der Anmeldung: **10.12.2014**
(21) Anmeldenummer: 13171040.2
(22) Anmeldetag: 07.06.2013
(51) Int. Cl.: B60L 11/18, H02J 7/00, B60L 11/00

(54) **Energiespeichersystem und Verfahren zur Spannungsanpassung eines Energiespeichers**

(71) Anmelder: Flextronics International Kft., Tab 8660 (HU)
(72) Erfinder: Covasala, Alexander, 73728 Esslingen (DE); Diez, Werner, 72649 Wolfschlugen (DE)
(74) Vertreter: Rupprecht, Kay

(57) **Zusammenfassung**

Es wird ein Energiespeichersystem (1), insbesondere zur Anwendung in einem Kraftfahrzeug, vorgeschlagen. Das Energiespeichersystem umfasst: einen Energiespeicher (3) mit mehreren in Serie geschalteten Energiespeicherzellen (5, 5a, 5b, 5c, 5d, 5e); wenigstens eine Schalteinrichtung (7), die einer oder mehreren Energiespeicherzelle(n) (5) zum Überbrücken derselben zugeordnet ist, und eine Steuereinrichtung (17) mit einem Steueralgorithmus zur Steuerung der wenigstens einen Schalteinrichtung (7), wobei der Steueralgorithmus dazu ausgebildet ist, zum Laden des Energiespeichers (3) wenigstens eine Schalteinrichtung (7) zu betätigen, um wenigstens eine zugeordnete Energiespeicherzelle (5) zu überbrücken.

## Beschreibung

Die Erfindung betrifft ein Energiespeichersystem gemäß dem Anspruch 1 und ein Verfahren zur Spannungsanpassung eines Energiespeichers gemäß dem Oberbegriff des Anspruchs 13.

Energiespeichersysteme der hier angesprochenen Art sind grundsätzlich bekannt. Sie umfassen einen wiederaufladbaren Energiespeicher, bei dem es sich beispielsweise um eine Lithium-Ionenbatterie handeln kann. Der elektrische Energiespeicher kann beispielsweise als Zusatzaggregat zur Anwendung in einem Kraftfahrzeug, insbesondere in einem Hybrid- oder Elektrofahrzeug, z.B. zur Aufnahme von Rekuperationsenergie dienen. Der Energiespeicher kann auch durch einen Generator, insbesondere durch die Lichtmaschine eines Kraftfahrzeugs mit Energie gespeist werden. Die gespeicherte Energie kann dann im Bedarfsfall wieder an das Bordnetz des Kraftfahrzeugs abgegeben werden. Der Energiespeicher kann also insbesondere zur Stabilisierung der Bordnetzspannung im Bedarfsfall herangezogen werden (beispielsweise bei einem Start- oder Beschleunigungsvorgang eines Verbrennungsmotors). Damit der Energiespeicher die Bordnetzspannung im Bedarfsfall stabilisieren kann, ist es notwendig, dass das Spannungsniveau des Energiespeichers dem Spannungsniveau des Bordnetzes entspricht. Problematisch ist hierbei, dass Energiespeicher der angesprochenen Art mehrere in Serie geschaltete Energiespeicherzellen aufweisen, um ein höheres Spannungsniveau zu erreichen. Die Summe der Einzelspannungen dieser Zellen entspricht jedoch üblicherweise nicht dem geforderten Spannungsniveau. Vielmehr erhöht sich die Gesamtspannung durch die einzelnen Zellen sprungweise um die Einzelspannungen, die je nach Art der Zelle beispielsweise 3,6 Volt betragen können. Daher ist eine bloße Serienschaltung von Zellen nicht ausreichend, um das Spannungsniveau des Energiespeichers exakt das geforderte Spannungsniveau des Bordnetzes zu bringen. Beim Zuschalten des Energiespeichers zum Zwecke der Stabilisierung würde vielmehr eine Spannungsspitze auf das Bordnetz wirken. Daher ist eine Spannungsanpassung des Energiespeichers an ein gefordertes Spannungsniveau notwendig.

Die Spannungsanpassung eines elektrischen Energiespeichers wird im Stand der Technik üblicherweise mit Hilfe eines Energiewandlers, wie beispielsweise mittels eines DC/DC-Wandlers vorgenommen. Der Energiespeicher ist über den Spannungswandler an das Bordnetz angekoppelt. Ein hierfür geeigneter Spannungswandler muss entsprechend dimensioniert sein und stellt folglich einen erheblichen Bauteilaufwand dar, welcher das Gewicht, den Platzbedarf, die Verlustleistung und die Kosten für ein entsprechendes Energiespeichersystem wesentlich erhöhen. Darüber hinaus wird üblicherweise darauf geachtet, dass sämtliche Zellen eines Energiespeichers gleiche Ladezustände/Spannungen zur gleichen Zeit aufweisen. Zur Herstellung eines entsprechenden symmetrischen Ladezustandes sind Balancierschaltungen vorgesehen, die wiederum die Komplexität des Energiespeichersystems signifikant erhöhen.

Aufgabe der vorliegenden Erfindung ist es daher, ein Energiespeichersystem und ein Verfahren zur Spannungsanpassung eines Energiespeichers zu schaffen, welches einfach aufgebaut ist, einen deutlich reduzierten Bauteilaufwand erfordert und darüber hinaus kostengünstig herstellbar ist.

Zur Lösung der oben genannten Aufgabe wird ein Energiespeichersystem mit den Merkmalen des Anspruchs 1 vorgeschlagen. Das Energiespeichersystem dient insbesondere zur Anwendung in einem Kraftfahrzeug und umfasst: einen Energiespeicher mit mehreren in Serie geschalteten Energiespeicherzellen; wenigstens eine Schalteinrichtung, die einer oder mehreren Energiespeicherzelle(n) zum Überbrücken desselben zugeordnet ist, und eine Steuereinrichtung mit einem Steueralgorithmus zur Steuerung der wenigstens einen Schalteinrichtung, wobei der Steueralgorithmus dazu ausgebildet ist, zum Laden des Energiespeichers wenigstens eine Schalteinrichtung zu betätigen, um wenigstens eine zugeordnete Energiespeicherzelle zu überbrücken.

Ein wesentlicher Punkt der Erfindung liegt also darin, dass das erfindungsgemäße Energiespeichersystem ohne einen Energiewandler, insbesondere ohne einen DC/DC-Wandler auskommt, der den gesamten Energiespeicher speisen muss. Statt mittels eines Energiewandlers wird eine Spannungsanpassung nämlich durch das Überbrücken von einer oder mehreren Energiespeicherzellen des Energiespeichers möglich. Durch das Überbrücken wenigstens einer Energiespeicherzelle kann das Spannungsniveau des Energiespeichers unter die Bordnetzspannung gesenkt werden. Dadurch, dass die Gesamtspannung des Energiespeichers durch das Überbrücken einer Zelle unter die Bordnetzspannung gesenkt wird, wird das Laden des Energiespeichers aus dem Bordnetz auf das geforderte Spannungsniveau ermöglicht. Da die Zellspannungen der Energiespeicherzellen, beispielsweise von Lithium-Ionenzellen deutlich unterhalb der Bordnetzspannung liegen, müssen mehrere Zellen in Serie geschaltet werden, um auf ein höheres Gesamtspannungsniveau des Energiespeichers zu kommen. Die Reihenschaltung von einzelnen Energiespeicherzellen ermöglicht jedoch nur Spannungssprünge im Raster der Zellspannung, so dass die Aneinanderreihung von mehreren Energiespeicherzellen üblicherweise nicht in dem geforderten Spannungsniveau (Sollspannung) resultiert. Gemäß der vorliegenden Erfindung wird die Spannungsanpassung des Energiespeichers, beispielsweise an das Spannungsniveau eines Bordnetzes, derart durchgeführt, dass die einzelnen Zellenspannungen des Energiespeichers über das Laden und Entladen nach einem bestimmten Algorithmus so angepasst werden, dass die Summe der Einzelspannungen der gewünschten Sollspannung entspricht. Dadurch ist es möglich, den Energiespeicher unmittelbar, d.h. ohne DC/DC-Wandler mit dem Bordnetz zu verbinden und das Bordnetz kann, beispielsweise im Falle eines Spannungseinbruchs, gestützt werden, ohne unerwünschte Spannungssprünge durch das Zuschalten des Energiespeichers zu erhalten. Üblicherweise wird bei Energiespeichern, welche aus Einzelzellen aufgebaut sind, darauf geachtet, immer gleiche Ladezustände/Spannungen zur gleichen Zeit zu erhalten. Dies erfordert zusätzliche Balancierschaltungen. Das erfindungsgemäße Energiespeichersystem hingegen ist so ausgebildet, dass die Energiespeicherzellen absichtlich mittels des Steueralgorithmus in einen unsymmetrischen Ladezustand gebracht werden, um unterschiedliche Zellenspannungen zu bekommen. Auf diese Weise wird die Gesamtspannung des Energiespeichers in dem Bereich des geforderten Spannungsfensters gesteuert.

Vorzugsweise ist der Algorithmus dabei so ausgebildet, dass wenigstens eine Energiespeicherzelle mit einer Zellenspannung detektiert wird, nach deren Abzug die Summe der Zellenspannungen der übrigen Energiespeicherzellen die kleinste Differenz zu einer Sollspannung aufweist. Bei der Sollspannung handelt es sich also vorzugsweise um eine Spannung, die das Spannungsniveau der jeweiligen Anwendung, beispielsweise also die Spannung eines Bordnetzes übersteigt, damit im Belastungsfall das Spannungsniveau des Bordnetzes bereitgestellt werden kann. Im Falle eines 12-Volt-Bordnetzes eines Pkw sollte sich die Spannung des Energiespeichers in einem Spannungsbereich von 13,2 V bis 16 V befinden.

Zur Detektion der einzelnen Zellspannungen umfasst das Energiespeichersystem vorzugsweise eine Spannungsmesseinrichtung, wobei jeweils eine Energiespeicherzelle einer Spannungsmesseinrichtung zugeordnet sein kann. Zum Laden und Entladen des Energiespeichers ist vorzugsweise eine überbrückbare bidirektionale Stromquelle und/oder ein überbrückbarer Widerstand am Ausgang des Energiespeichers angeordnet. Dabei wird der Ladestrom und vorzugsweise auch der Entladestrom des Energiespeichers mit Hilfe eines Linearreglers geregelt, um Rippelspannungen zu vermeiden, die durch den Generator, also beispielsweise durch die Lichtmaschine, der den Energiespeicher speist, erzeugt werden. Durch derartige Rippelspannungen wird die Lebensdauer des Energiespeichers negativ beeinflusst, was durch den Linearregler vermieden wird.

Das Energiespeichersystem kann auch einen DC/DC-Wandler aufweisen, der wenigstens eine der Energiespeicherzellen speist. Vorzugsweise speist der DC/DC-Wandler nur eine einzige Energiespeicherzelle, so dass der Wandler entsprechend einfach dimensioniert und damit kostengünstig und leicht ausgebildet sein kann. Bei einem derartigen Wandler ist die Verlustleistung auch entsprechend gering.

Der Energiespeicher kann beispielsweise als Batterie, insbesondere als Lithium-Ionenbatterie oder als Superkondensator ausgebildet sein. Die Anzahl der Energiespeicherzellen kann je nach Anwendung und dem geforderten Spannungsniveau variieren. Im Übrigen kann der Energiespeicher auch ein oder mehrere parallel geschaltete Energiespeicherzellen aufweisen.

Die Steuereinrichtung kann einen Mikrocontroller aufweisen. Darüber hinaus können eine Kommunikationsschnittstelle zu einem Kraftfahrzeug, ein Temperaturmesskreis, Spannungsmesskreise und ein Strommesskreis vorgesehen sein.

Zur Lösung der oben genannten Aufgabe wird auch ein Verfahren zur Spannungsanpassung eines Energiespeichers mit mehreren in Serie geschalteten Energiespeicherzellen, insbesondere zur Anpassung an die Bordnetzspannung in einem Kraftfahrzeug, vorgeschlagen. Das Verfahren zeichnet sich durch Überbrücken wenigstens einer Energiespeicherzelle mittels einer Schalteinrichtung derart aus, dass die Summe der Zellspannungen der nicht überbrückten Energiespeicherzellen kleiner als eine Sollspannung ist, und durch das Zuführen eines Ladestroms zu dem Energiespeicher.

Entscheidend ist somit, dass die einzelnen Zellspannungen mittels eines definierten Verfahrens, mit Hilfe des Steueralgorithmus, absichtlich in einen unsymmetrischen Ladezustand gebracht werden, um die unterschiedliche Zellspannungen zu erhalten. Auf diese Weise steuert das Verfahren die Gesamtspannung in den Bereich des geforderten Spannungsfensters. Der unsymmetrische Ladezustand wird dabei dadurch erreicht, dass einzelne Zellen während des Ladevorgangs nach einem definierten Steueralgorithmus überbrückt werden, sodass die anderen nicht überbrückten Zellen zumindest zeitweise aufgeladen werden. Während eines Ladevorgangs können auf diese Weise ein oder mehrere Zellen gleichzeitig oder sukzessive zu oder abgeschaltet werden, sodass sich die Gesamtspannung des Energiespeichers permanent im gewünschten Spannungsbereich bewegt.

Vorzugsweise wird hierzu wenigstens eine Energiespeicherzelle mit einer Zellenspannung detektiert, nach deren Abzug die Summe der Zellenspannungen der nicht überbrückten Energiespeicherzellen die kleinste Differenz zu einer Sollspannung aufweist. Diese detektierte Energiespeicherzelle wird vorzugsweise gemäß der Erfindung überbrückt. Anschließend werden die übrigen, nicht überbrückten Zellen, mit einem Ladestrom aufgeladen, bis das gewünschte Spannungsniveau erreicht ist. Der Ladestrom, und im Übrigen auch der Entladestrom des Energiespeichers wird vorzugsweise mittels eines Linearreglers geregelt, um Rippelspannungen zu vermeiden, welche die Lebensdauer des Energiespeichers beeinträchtigen können. Weiterhin kann der Ladestrom für mindestens eine Energiespeicherzelle über einen DC/DC-Wandler zugeführt werden. Da der DC/DC-Wandler vorzugsweise nur eine einzige Energiespeicherzelle speist, bei der es sich im Übrigen um die überbrückbare Energiespeicherzelle handeln kann, kann er entsprechend einfach und damit leicht und kostengünstig ausgebildet sein.

Die Erfindung wird im Folgenden anhand der Zeichnung näher erläutert. Es zeigen:
- Fig. 1: ein Schaltbild eines Energiespeichersystems gemäß einer ersten Ausführungsform der Erfindung;
- Fig. 2: ein Schaltbild einer Energiespeichereinrichtung gemäß einer zweiten Ausführungsform der Erfindung;
- Fig. 3: ein Schaltbild einer Energiespeichereinrichtung gemäß einer dritten Ausführungsform der Erfindung; und
- Fig. 4: ein Schaltbild einer Energiespeichereinrichtung gemäß einer vierten Ausführungsform der Erfindung.

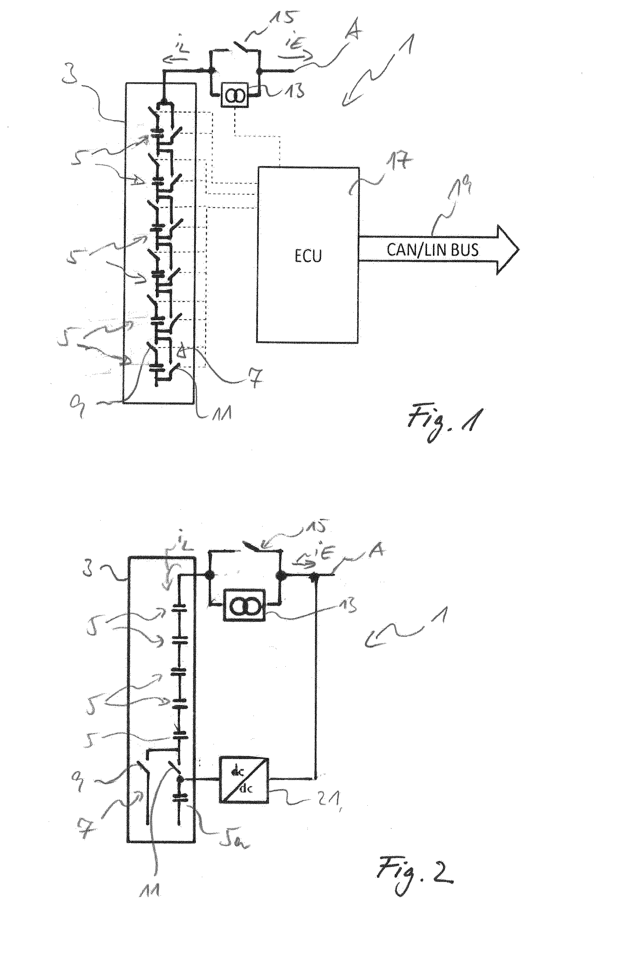

Fig. 1 zeigt ein Schaltbild eines erfindungsgemäßen Energiespeichersystems 1 gemäß einer ersten Ausführungsform der Erfindung. Das Energiespeichersystem 1 umfasst einen Energiespeicher 3, der mehrere in Serie geschaltete Energiespeicherzellen 5 aufweist. Bei der Ausführungsform gemäß Fig. 1 sind insgesamt sechs Energiespeicherzellen 5 vorgesehen. Es versteht sich, dass die Anzahl und Anordnung der Energiespeicherzellen 5 je nach Anwendungsfall und gefordertem Spannungsniveau des Energiespeichers 3 variieren können. Insbesondere ist die Anzahl der verwendeten Einzelzellen auch abhängig von der Art und Zusammensetzung der Zellen (z.B. Li-Ionen Akkuzellen) und der resultierenden Einzelzellspannungen (z.B. 3,6 V bei Li-Ionen). Vorzugsweise sind so viele Einzelzellen vorgesehen, dass die resultierende maximal erreichbare Gesamtspannung des Energiespeichers 3 die geforderte maximale Sollspannung übersteigt.

In der Ausführungsform nach Fig. 1 ist jeder Energiespeicherzelle 5 eine Schalteinrichtung 7 zugeordnet, die jeweils ein erstes Schaltelement 9 und ein zweites Schaltelement 11 umfasst. Bei den Schaltelementen kann es sich beispielsweise um halbleitende Schaltelemente, wie einen MOSFET oder dergleichen handeln. Die Schalteinrichtung 7 dient zur Überbrückung einzelner Energiespeicherzellen 5. Sofern das erste Schaltelement 9 einer Schalteinrichtung 7 geschlossen, und das zweite Schaltelement 11 geöffnet ist, fließt ein Ladestrom i_{L} also durch die zugeordnete Energiespeicherzelle 5. Ist hingegen das betreffende erste Schaltelement 9 geöffnet und das zweite Schaltelement 11 geschlossen, so wird die Energiespeicherzelle 5 überbrückt und der Ladestrom i_{L} fließt quasi an der Energiespeicherzelle 5 vorbei. Die Energiespeicherzelle 5, die auf diese Weise mittels einer Schalteinrichtung 7 überbrückt ist, wird folglich während eines Ladevorgangs nicht aufgeladen. Darüber hinaus reduziert sich die Summe der Gesamtspannung des Energiespeichers 3 entsprechend, sofern eine Energiespeicherzelle 5 mit Hilfe der Schalteinrichtung 7 überbrückt wird.

Sowohl zur Steuerung eines Ladestroms i_{L}, der in den Energiespeicher 3 hineinfließt, als auch zur Steuerung eines Entladestroms i_{E}, der aus dem Energiespeicher 3 herausfließt, ist eine bidirektionale Stromquelle 13 vorgesehen. Die bidirektionale Stromquelle 13 kann sowohl den Ladestrom als auch den Entladestrom des Energiespeichers 3 steuern. Die bidirektionale Stromquelle 13 ist mittels eines Schaltelements 15 überbrückbar. Bei der bidirektionalen Stromquelle 13 kann es sich beispielsweise um eine Strompumpe, insbesondere in Form eines zweikanaligen Differenzverstärkers oder dergleichen handeln. Anstelle der bidirektionalen Stromquelle 13 kann auch ein Widerstand als Strombegrenzungselement vorgesehen sein.

Weiterhin umfasst das Energiespeichersystem 1 eine Steuereinrichtung 17, die mit der Schalteinrichtung 7 und konkret mit den Schaltelementen 9 und 11 jeder Energiespeicherzelle 5 verbunden ist. Die Steuereinrichtung 17 ist darüber hinaus mit der bidirektionalen Stromquelle 13 verbunden und kann über eine Kommunikationsschnittstelle 19 verfügen, mittels der die Steuereinrichtung in einem Anwendungsfall beispielsweise mit dem Bordnetz eines Kraftfahrzeugs verbunden werden kann.

Die Steuereinrichtung 17 umfasst ferner einen Steueralgorithmus, der insbesondere mittels eines in der Figur nicht dargestellten Mikrocontrollers ausgeführt werden kann und in einer entsprechenden Speichereinrichtung (in der Figur ebenfalls nicht gezeigt) der Steuereinrichtung 17 gespeichert sein kann. Der Steueralgorithmus ist derart ausgebildet, dass er die Schaltelemente der Schalteinrichtungen 7 beeinflussen kann, und ist zu diesem Zweck mit den Schalteinrichtungen 7 verbunden. Konkret bewirkt der Steueralgorithmus, dass wenigstens eine Schalteinrichtung 7 zum Laden des Energiespeichers 3 einen Betriebszustand aufweist, in welchem eine Energiespeicherzelle 5 überbrückt wird, d.h. also dass der entsprechende erste Schalter 9 geöffnet und der zweite Schalter 11 geschlossen ist. Während dem Laden des Energiespeichers können noch weitere Schalteinrichtungen 7 derart betätigt werden, dass ein oder mehrere Zellen 5 zu oder abgeschaltet werden.

Erfindungsgemäß bewirkt der Steueralgorithmus ein Betätigen der Schalteinrichtungen 7 in Abhängigkeit von Parametern, bei denen es sich um die vorgegebene Sollspannung, insbesondere um eine minimale und eine maximale Sollspannung (Spannungsfenster), sowie um den Ladezustand und/oder die Spannung der einzelnen Energiespeicherzellen 5 handelt. Den Ladezustand und die Spannung der Einzelzellen erhält der Steueralgorithmus im Übrigen durch die hierfür vorgesehenen Mess- bzw. Erfassungseinrichtungen. Der Steueralgorithmus passt den Schaltzustand der Schalteinrichtungen 7 je nach Wert der o.g. Parameter während des Ladevorgangs an und sorgt somit für eine dynamische, adaptive Aufladung der Energiespeichereinrichtung. Der Ladezustand der einzelnen Energiespeicherzellen kann mit Hilfe einer Strom-/Spannungsmessung und einer Temperaturmessung mittels eines definierten Algorithmus der Steuereinrichtung 17 bestimmt werden.

Der Ausgangszustand des erfindungsgemäßen Verfahrens zur Spannungsanpassung ist ein Energiespeicher, dessen Spannung größer als die Bordnetzspannung ist. Für den Ladevorgang des Energiespeichers 3 legt der Steueralgorithmus aufgrund der vorgenannten Parameter/Randbedingungen fest, welche der Energiespeicherzellen 5 überbrückt werden soll, damit die Spannung des Energiespeichers unter die Bordnetzspannung sinkt. Nur wenn die Spannung des Energiespeichers kleiner ist als die Bordnetzspannung, kann der Energiespeicher aus dem Bordnetz geladen werden. Bei dem entsprechenden Auswahlkriterium handelt es sich insbesondere um die jeweilige Zellspannung, die mit Hilfe einer in der Figur nicht gezeigten Spannungsmesseinrichtung erfasst wird. Durch den Steueralgorithmus werden die Zellspannungen jeder der Energiespeicherzellen 5 miteinander verglichen und insbesondere diejenigen Energiespeicherzelle als zu überbrückende Zelle festgelegt, die nach Abzug ihrer Zellspannung in der kleinsten Differenz zwischen der Summe der nicht überbrückten Zellspannungen und der Sollspannung resultiert. Erst nach dem Überbrücken, d.h. nach dem Abschalten der entsprechenden Energiespeicherzelle 5 wird ein Ladestrom i_{L}, beispielsweise aus einem Bordnetz eines Kraftfahrzeugs, dem Energiespeicher 3 zugeführt. Das Verfahren beginnt wieder von vorne, sobald die Spannung des Energiespeichers die Bordnetzspannung wieder übersteigt.

Je nach Anwendungsfall und Einsatzgebiet des Energiespeichersystems 1 kann der Lade- und Entladezeitpunkt des Energiespeichers variieren. In einem Anwendungsfall kann beispielsweise der Energiespeicher 3 mit Hilfe von Rekuperationsenergie gespeist werden, wenn der Fahrer eines Kraftfahrzeugs bremst. Sobald der Fahrer wieder auf das Gaspedal tritt, wird das Bordnetz mit der Energie des Energiespeichers unterstützt, wobei ein Entladestrom i_{E} vom Energiespeicher 3 in ein am Anschluss A des Energiespeichersystems 1 angeschlossenes Bordfahrzeug gespeist wird. Sofern in einem Anwendungsfall der Energiespeicher 3, beispielsweise im Falle einer Rekuperation von Bremsenergie, aufgeladen werden soll, muss die Gesamtspannung des Energiespeichers 3 kleiner sein als die des Bordnetzes, da sonst der Energiespeicher 3 nicht auf die Sollspannung aufgeladen werden kann. Um die Gesamtspannung des Energiespeichers 3 unter die erforderliche Sollspannung, insbesondere also unter die Bordnetzspannung abzusenken, wird mindestens eine Energiespeicherzelle 5 entfernt, d.h. mit Hilfe der Schalteinrichtung 7 überbrückt. Damit sinkt die Gesamtspannung des Energiespeichers 3 unter die Bordnetzspannung und das Laden des Energiespeichers aus dem Bordnetz wird ermöglicht. Über die Kommunikationsschnittstelle 19 kann die Steuereinrichtung 17 Informationen aus dem Kraftfahrzeug darüber erhalten, ob sich das Fahrzeug beispielsweise im Schubbetrieb befindet und der Energiespeicher 3 folglich aufgeladen werden kann, oder ob das Bordnetz z.B. im Falle eines Startvorgangs stabilsiert werden muss und folglich ein Entladestrom den Energiespeicher 3 in das Bordnetz hinein verlassen muss.

Durch das Überbrücken einer oder mehrerer Energiespeicherzellen 5 wird folglich gezielt ein unsymmetrischer Ladezustand der Energiespeicherzellen herbeigeführt. Das heißt, dass zumindest einige der Zellen des Energiespeichers zum gleichen Zeitpunkt unterschiedliche Ladezustände haben. Die resultierenden unterschiedlichen Zellspannungen ermöglichen es somit, die Gesamtspannung des Energiespeichers in einem geforderten Spannungsfenster zu halten. Bei einem 12-Volt-Bordnetz eines PKW bewegt sich dieses Spannungsfenster vorzugsweise in einem Bereich von 13,2 V bis 16 V.

Die Fig. 2 zeigt ein Schaltbild eines Energiespeichersystems 1 gemäß einer zweiten Ausführungsform der Erfindung. Bei der in Fig. 2 gezeigten Ausführungsform ist die Steuereinrichtung 17 zur Vereinfachung nicht dargestellt. Jedoch wirkt sie auch in diesem Ausführungsbeispiel mit der Schalteinrichtung und der bidirektionalen Stromquelle 13 zusammen und weist vorzugsweise auch eine Kommunikationsschnittstelle 19 auf.

Das Energiespeichersystem 1 gemäß Fig. 2 umfasst nur eine einzige Schalteinrichtung 7 mit einem ersten Schaltelement 9 und einem zweiten Schaltelement 11. Die Schalteinrichtung 7 ist nur einer einzigen Energiespeicherzelle 5a zugeordnet. Die Energiespeicherquelle 5a lässt sich mit Hilfe der Schalteinrichtung 7 überbrücken, indem der erste Schalter 9 geschlossen wird und der zweite Schalter 11 geöffnet wird. Im Gegenstand zu dem in Fig. 1 gezeigten Ausführungsbeispiel weisen die übrigen Energiespeicherzellen 5 keine zugeordneten Schalteinrichtungen 7 auf. Um einen Ladevorgang des Energiespeichers 3 zu bewirken, wird folglich lediglich die Energiespeicherzelle 5a mittels der Schalteinrichtung 7 entfernt, so dass sich die Gesamtspannung des Energiespeichers 3 entsprechend reduziert. Die Energiespeicherzelle 5a ist über einen DC/DC-Wandler 21 mit dem Anschluss A des Energiespeichersystems 1 verbunden. Sofern das Energiespeichersystem 1 aus dem Bordnetz gespeist wird, und die Energiespeicherzelle 5a überbrückt ist, kann die Energiespeicherzelle 5a also mit Hilfe des DC/DC-Wandlers 21 getrennt von dem anderen Energiespeicherzellen 5 aufgeladen werden auf ein gewünschtes Spannungsniveau. Da der DC/DC-Wandler 21 nur eine einzige Energiespeicherzelle 5a speisen muss, kann er entsprechend einfach und leicht und damit kostengünstig ausgebildet sein. Der DC/DC-Wandler 21 weist damit eine geringe Verlustleistung auf und ermöglicht es im überbrückten Zustand die Energiespeicherzelle 5a zu laden.

Dementsprechend wird der DC/DC-Wandler 21 vorzugsweise mit der in Fig. 2 nicht gezeigten Steuereinrichtung 17 angesteuert, so dass die Gesamtspannung des Energiespeichers 3 auf die gewünschte Sollspannung angepasst wird. Der Steueralgorithmus der Steuereinrichtung 17 kann folglich entsprechend einfach ausgebildet sein, da kein Vergleich der Zellenspannungen der einzelnen Energiespeicherzellen vor dem Ladevorgang des Energiespeichers 3 notwendig ist. Vielmehr wird immer die Energiespeicherzelle 5a aus dem Schaltkreis entfernt, so dass sich die erfasste Gesamtspannung des Energiespeichers 3 immer um den Betrag der Zellspannung der Energiespeicherzelle 5a reduziert, wenn die Energiespeicherzelle 5a überbrückt wird. Die Summe der Zellspannungen der nicht überbrückten Energiespeicherzellen 5 liegt im Falle der Überbrückung der Energiespeicherzelle 5a unterhalb der am Anschluss A anliegenden Spannung, beispielsweise eines Bordnetzes, so dass ein Ladestrom i_{L} aufgrund der Potentialdifferenz in den Energiespeicher 3 fließt.

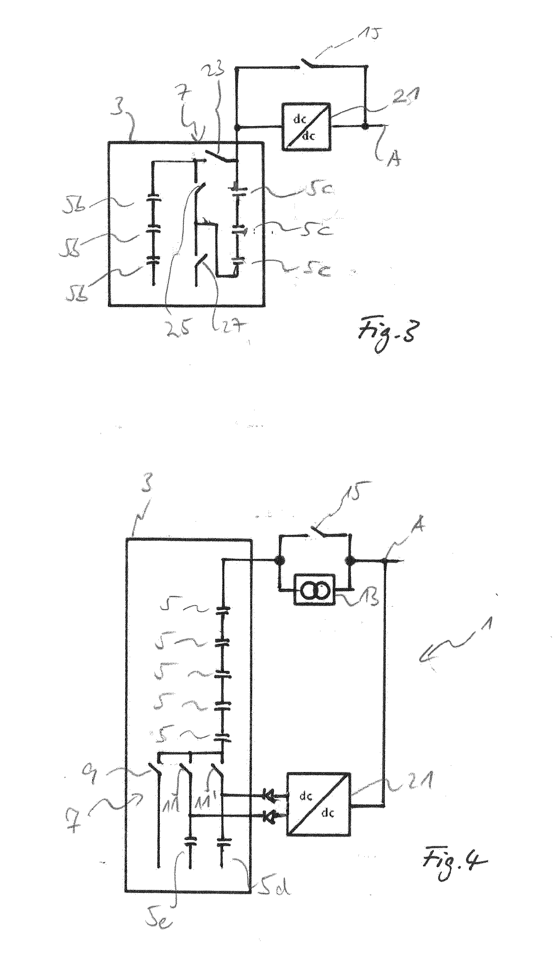

Die Fig. 3 zeigt ein Energiespeichersystem 1 gemäß einer dritten Ausführungsform der Erfindung. Gleiche Teile sind mit gleichen Bezugszeichen versehen, so dass insofern auf die Beschreibung zu den vorangegangenen Figuren verwiesen wird, um Wiederholungen zu vermeiden.

Auch in der Fig. 3 ist die Steuereinrichtung 17 nicht dargestellt. Die Ausführungsform nach Fig. 3 unterscheidet sich von den Ausführungsformen nach den Figuren 1 und 2 darin, dass die Schalteinrichtung 7 derart ausgebildet ist, dass eine erste Reihenschaltung von Energiespeicherzellen 5b mit einer zweiten Reihenschaltung von Energiespeicherzellen 5c parallel schaltbar ist. Darüber hinaus lassen sich mit Hilfe der Schalteinrichtung 7 die beiden Reihenschaltungen der Energiespeicherzellen 5b bzw. 5c in eine Gesamtreihenschaltung schalten. Weiterhin lässt sich jeweils einer der beiden Reihenschaltungen aus Energiespeicherzellen 5b oder 5c vollständig überbrücken. Hierzu weist die Schalteinrichtung 7 ein erstes Schaltelement 23, ein zweites Schaltelement 25 und ein drittes Schaltelement 27 auf.

In einem ersten Schaltzustand der Schalteinrichtung 7, in welchem das erste Schaltelement 23 geschlossen ist und die beiden zweiten und dritten Schaltelemente 25 und 27 geöffnet sind, ist die Reihenschaltung aus den Energiespeicherzellen 5c vollständig überbrückt. In diesem Fall wird die Gesamtspannung des Energiespeichers 3 ausschließlich bestimmt durch die Einzelspannungen der Energiespeicherzellen 5b.

Sofern in einem zweiten Schaltzustand der Schalteinrichtung 7 das erste Schaltelement 23 und das zweite Schaltelement 25 geöffnet sind und das dritte Schaltelement 27 geschlossen ist, wird die Reihenschaltung aus den Energiespeicherzellen 5b überbrückt. In diesem Schaltzustand wird die Gesamtspannung des Energiespeichers 3 ausschließlich bestimmt durch die Summe der Einzelspannungen der Energiespeicherzellen 5c.

In einem dritten Schaltzustand der Schalteinrichtung 7 ist das erste Schaltelement 23 und das dritte Schaltelement 27 geschlossen, während das zweite Schaltelement 25 geöffnet ist. In diesem Schaltzustand sind die Reihenschaltungen der Energiespeicherzellen 5b und 5c parallel geschaltet. Die Gesamtspannung des Energiespeichers 3 wird in diesem Fall bestimmt durch die an den beiden Reihenschaltungen der Energiespeicherzellen 5b und 5c anliegenden Spannungen.

In einem vierten Schaltzustand der Schalteinrichtung 7 sind das erste Schaltelement 23 und das dritte Schaltelement 27 geöffnet, während das zweite Schaltelement 25 geschlossen ist. In diesem Fall bilden die Energiespeicherzellen 5b und 5c eine Reihenschaltung, so dass sich die Gesamtspannung des Energiespeichers 3 aus der Summe der Einzelspannungen der Energiespeicherzellen 5b und 5c ergibt.

In dem in Fig. 3 gezeigten Ausführungsbeispiel sind insgesamt sechs Energiespeicherzellen vorgesehen. Es versteht sich jedoch, dass entsprechend den anderen Ausführungsbeispielen die Anzahl der benötigten Energiespeicherzellen je nach Anwendungsgebiet und erforderlicher Sollspannung am Anschluss A des Energiespeichersystems 1 variieren kann. Die Ansteuerung der Schalteinrichtung 7 erfolgt wiederum mittels eines Steueralgorithmus, der in der entsprechenden Steuereinrichtung 17 (in der Fig. 3 nicht dargestellt) gespeichert ist. Der Steueralgorithmus wählt auch bei dem in Fig. 3 gezeigten Ausführungsbeispiel die entsprechenden zu überbrückenden Zellen aus, die die Gesamtspannung des Energiespeichers 3 unter die am Ausgang A anliegende Spannung A senkt, so dass ein Ladestrom i_{L} in den Energiespeicher 3 hineinfließt. In der Fig. 3 ist anstelle einer bidirektionalen Stromquelle ein DC/DC-Wandler 21 vorgesehen.

Die Fig. 4 zeigt noch ein viertes Ausführungsbeispiel eines erfindungsgemäßen Energiespeichersystems 1. Das in Fig. 4 gezeigte Energiespeichersystem 1 umfasst insgesamt sieben Energiespeicherzellen, wobei zwei der Energiespeicherzellen 5e und 5d mit Hilfe von Schalteinrichtungen 7 überbrückbar sind. Die Ausführungsform des in Fig. 4 gezeigten Energiespeichersystems entspricht im Wesentlichen der in Fig. 2 gezeigten Ausführungsform. Ein wesentlicher Unterschied ist eine zweite Energiespeicherzelle 5e, die parallel zu der Energiespeicherzelle 5d geschaltet ist und die getrennt von der Energiespeicherzelle 5d überbrückbar ist. Sowohl die Energiespeicherzelle 5e als auch die parallel geschaltete Energiespeicherzelle 5d sind mit einem DC/DC-Wandler 21 verbunden, so dass die Energiespeicherzellen 5e und 5d auch im überbrückten Zustand, d.h. also wenn die Schaltelemente 11, 11' geöffnet und das Schaltelement 9 geschlossen ist, aufgeladen werden können.

Wie auch in den vorangegangenen Ausführungsformen der Erfindung wird bei dem in Fig. 4 gezeigten Energiespeichersystem 1 die Schalteinrichtung 7 mit Hilfe einer Steuerung und insbesondere mit Hilfe eines Steueralgorithmus gesteuert. Auf diese Weise ist auch bei dem Energiespeichersystem 1 gemäß Fig. 4 die Gesamtspannung des Energiespeichers 3 derart reduziert, dass ein Aufladevorgang des Energiespeichers 3 auf die Sollspannung vollzogen werden kann.

Ein Verfahren zur Spannungsanpassung des Energiespeichers 3 mit den mehreren in Serie geschalteten Energiespeicherzellen 5, beispielsweise zur Anpassung an die Bordnetzspannungen an einem Kraftfahrzeug, kann also wie folgt von statten gehen: Wenigstens eine Energiespeicherzelle 5 muss mit einer Schalteinrichtung 7 derart überbrückt werden, dass die Summe der Zellspannungen der nicht überbrückten, d.h. also der restlichen Energiespeicherzellen 5 kleiner ist als die Sollspannung. Dies setzt voraus, dass die Gesamtspannung des Energiespeichers vorher gleich oder größer war als die Bordnetzspannung. Bei der Sollspannung handelt es sich üblicherweise um eine Spannung, die ausreicht, um die Bordnetzspannung im Bedarfsfall zu stabilisieren. Anschließend kann ein Ladestrom zu dem Energiespeicher 3 zugeführt werden. Der Energiespeicher 3 kann auf diese Weise ohne Spannungssprünge auf das erforderliche Niveau, d.h. auf die erforderliche Sollspannung angehoben werden. Durch die Überbrückung wenigstens einer Energiespeicherzelle in dem Energiespeicher 3 entsteht ein Potentialunterschied, der das Aufladen des Energiespeichers 3, insbesondere aus dem Bordnetz eines Kraftfahrzeugs, ermöglicht. Dadurch, dass die einzelnen Energiespeicherquellen 5 absichtlich in einem unsymmetrischen Ladezustand gebracht werden, kann die Gesamtspannung exakt in dem Bereich des geforderten Spannungsfensters gesteuert werden.

Die Zellen werden insgesamt also in einem definierten minimalen und maximalen Ladezustand betrieben, der je nach Auslegung und Randbedingungen an das System angepasst werden kann. Die Begrenzung der Ladung und Entladung der einzelnen Zellen wird dabei durch die Schalteinrichtungen 7 bewirkt, die je nach Ladezustand der einzelnen Zellen und/oder Zellenspannung das Zu- oder Abschalten einzelner Zellen veranlasst. Die Vorrichtung enthält eine Strommessung, eine Spannungsmessung für jede einzelne Zelle und eine Temperaturmessung um über einen definierten Algorithmus eine Ladezustandsbestimmung der einzelnen Energiespeicherzellen 5 durchzuführen. Um die Verlustleistung des Energiespeichersystems gering zu halten, wird eine geringe Spannungsdifferenz zwischen der Gesamtspannung des Energiespeichers 3 und der Bordnetzspannung angestrebt. In diesem Fall weist ein Linearregler nur eine minimale Verlustleistung auf.

Bei den Ausführungsbeispielen, bei denen nicht jede einzelne Energiespeicherzelle über eine Schalteinrichtung 7 verfügt, kann die überbrückte Energiespeicherzelle mit Hilfe des DC/DC-Wandlers auf ein Spannungsniveau angehoben werden, welches in einer möglichst geringen Spannungsdifferenz der Gesamtspannung des Energiespeichers 3 und der Bordnetzspannung resultiert.

### Bezugszeichenliste

- 1: Energiespeichersystem
- 3: Energiespeicher
- 5: Energiespeicherzelle
- 7: Schalteinrichtung
- 9: erstes Schaltelement
- 11: zweites Schaltelement
- 13: bidirektionale Stromquelle
- 15: Schaltelement
- 17: Steuereinrichtung
- 19: Kommunikationsschnittstelle
- 21: DC/DC-Wandler
- 23: erstes Schaltelement
- 25: zweites Schaltelement
- 27: drittes Schaltelement
- A: Anschluss
- I_{L}: Ladestrom
- I_{E}: Entladestrom

## Patentansprüche

1. Energiespeichersystem (1), insbesondere zur Anwendung in einem Kraftfahrzeug, aufweisend:
- einen Energiespeicher (3) mit mehreren in Serie geschalteten Energiespeicherzellen (5),
- wenigstens eine Schalteinrichtung (7), die einer oder mehreren Energiespeicherzelle(n) (5) zum Überbrücken derselben zugeordnet ist, und
- eine Steuereinrichtung (17) mit einem Steueralgorithmus zur Steuerung der wenigstens einen Schalteinrichtung (7), wobei der Steueralgorithmus dazu ausgebildet ist, zum Laden des Energiespeichers (3) wenigstens eine Schalteinrichtung (7) zu betätigen, um wenigstens eine zugeordnete Energiespeicherzelle (5) zu überbrücken.

2. Energiespeichersystem nach Anspruch 1,
**dadurch gekennzeichnet, dass**
wenigstens einer Energiespeicherzelle (5) eine Spannungsmesseinrichtung zugeordnet ist.

3. Energiespeichersystem nach Anspruch 1 oder 2,
**dadurch gekennzeichnet, dass**
eine überbrückbare bidirektionale Stromquelle (13) und/oder ein überbrückbarer Widerstand am Ausgang des Energiespeichers (3) angeordnet ist.

4. Energiespeichersystem nach einem der vorhergehenden Ansprüche,
**dadurch gekennzeichnet, dass**
ein DC/DC-Wandler (21) vorgesehen ist, der wenigstens eine der Energiespeicherzellen (5a) speist.

5. Energiespeichersystem nach einem der vorhergehenden Ansprüche,
**dadurch gekennzeichnet, dass**
jeder Energiespeicherzelle (5) eine Schalteinrichtung (7) zugeordnet ist, und dass der Steueralgorithmus dazu ausgebildet ist, vor dem Laden des Energiespeichers (3) diejenige Energiespeicherzelle (5) abzuschalten, welche die kleinste Spannungsdifferenz zu einer vorgegebenen Sollspannung aufweist.

6. Energiespeichersystem nach einem der vorhergehenden Ansprüche,
**dadurch gekennzeichnet, dass**
der Energiespeicher (3) als wiederaufladbare Batterie, insbesondere als Li-Ionen Batterie, oder als Superkondensator ausgebildet ist.

7. Energiespeichersystem nach einem der vorhergehenden Ansprüche,
**dadurch gekennzeichnet, dass**
der Energiespeicher (3) ein oder mehrere parallel geschaltete Energiespeicherzellen (5) aufweist.

8. Energiespeichersystem nach einem der vorhergehenden Ansprüche,
**dadurch gekennzeichnet, dass**
ein Linearregler zur Regelung des Ladestroms des Energiespeichers (3) vorgesehen ist.

9. Energiespeichersystem nach einem der vorhergehenden Ansprüche,
**dadurch gekennzeichnet, dass**
die Steuereinrichtung (17) einen Mikrocontroller aufweist.

10. Energiespeichersystem nach einem der vorhergehenden Ansprüche,
**dadurch gekennzeichnet, dass**
die Steuereinrichtung (17) eine Kommunikationsschnittstelle (19) zu einem Kraftfahrzeug aufweist.

11. Energiespeichersystem nach einem der vorhergehenden Ansprüche,
**dadurch gekennzeichnet, dass**
eine Temperaturerfassungseinrichtung zur Erfassung der Zellentemperatur vorgesehen ist.

12. Energiespeichersystem nach einem der vorhergehenden Ansprüche,
**dadurch gekennzeichnet, dass**
der Algorithmus dazu ausgebildet ist, wenigstens eine Energiespeicherzelle (5) mit einer Zellenspannung zu detektieren, nach deren Abzug die Summe der Zellen spannungen der übrigen Energiespeicherzellen (5) die kleinste Differenz zu einer Sollspannung aufweist.

13. Verfahren zur Spannungsanpassung eines Energiespeichers (3) mit mehreren in Serie geschalteten Energiespeicherzellen (5), insbesondere zur Anpassung an die Bordnetzspannung in einem Kraftfahrzeug,
**gekennzeichnet durch**
- überbrücken wenigstens einer Energiespeicherzelle (5) mittels einer Schalteinrichtung (7) derart, dass die Summe der Zellspannungen der nicht überbrückten Energiespeicherzellen (5) kleiner als eine Sollspannung ist, und
- zuführen eines Ladestroms zu dem Energiespeicher (3).

14. Verfahren nach Anspruch 13,
**dadurch gekennzeichnet, dass**
wenigstens eine Energiespeicherzelle (5) mit einer Zellenspannung detektiert wird, nach deren Abzug die Summe der Zellenspannungen der nicht überbrückten Energiespeicherzellen (5) die kleinste Differenz zu einer Sollspannung aufweist.

15. Verfahren nach Anspruch 13 oder 14,
**dadurch gekennzeichnet, dass**
der Ladestrom des Energiespeichers (3) mittels eines Linerreglers geregelt wird.

16. Verfahren nach einem der vorhergehenden Ansprüche 13 bis 15,
**dadurch gekennzeichnet, dass**
der Ladestrom für mindestens eine Energiespeicherzelle (5) über einen DC/DC-Wandler (21) zugeführt wird.
